(19) Europäisches Patentamt / European Patent Office / Office européen des brevets

(11) **EP 3 274 686 B1**

(12) **FASCICULE DE BREVET EUROPEEN**

(45) Date de publication et mention de la délivrance du brevet:
**18.09.2019 Bulletin 2019/38**

(21) Numéro de dépôt: **16719442.2**

(22) Date de dépôt: **23.03.2016**

(51) Int Cl.:
*G01N 15/02* *(2006.01)*       *G01N 15/14* *(2006.01)*

(86) Numéro de dépôt international:
**PCT/FR2016/050638**

(87) Numéro de publication internationale:
**WO 2016/151243 (29.09.2016 Gazette 2016/39)**

(54) **DISPOSITIF ET PROCÉDÉ DE DÉTERMINATION DE LA TENEUR EN EAU DANS L'ATMOSPHÈRE, DISPOSITIF ET PROCÉDÉ DE DÉTECTION DE CONDITIONS GIVRANTES ET PROGRAMMES D'ORDINATEUR**

VORRICHTUNG UND VERFAHREN ZUR BESTIMMUNG DES WASSERGEHALTS IN DER ATMOSPHÄRE, VORRICHTUNG UND VERFAHREN ZUR DETEKTION VON VEREISUNGSBEDINGUNGEN UND COMPUTERPROGRAMME

DEVICE AND METHOD FOR DETERMINING THE WATER CONTENT IN THE ATMOSPHERE, DEVICE AND METHOD FOR DETECTING ICING CONDITIONS AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2015 FR 1552402**

(43) Date de publication de la demande:
**31.01.2018 Bulletin 2018/05**

(73) Titulaire: **Zodiac Aerotechnics**
**78370 Plaisir (FR)**

(72) Inventeurs:
• **THOREZ, Manuel**
**91470 Les Molieres (FR)**
• **PASZKIEWICZ, Laurent**
**92140 Clamart (FR)**

(74) Mandataire: **Cabinet Plasseraud**
**66, rue de la Chaussée d'Antin**
**75440 Paris Cedex 09 (FR)**

(56) Documents cités:
**US-A1- 2006 232 780      US-A1- 2008 231 854**

## Description

La présente invention se situe dans le domaine de détection de conditions givrantes dans un aéronef en vol.

En particulier, la présente invention concerne un dispositif et un procédé de détermination de la teneur en eau dans l'atmosphère, un dispositif et un procédé de détection de conditions atmosphériques givrantes. L'invention se rapporte également à un programme d'ordinateur.

Depuis le début des années 1990, des incidents de réacteurs et des anomalies de mesures de vitesse aérodynamique et de température des avions de ligne ont été observés à haute altitude et basse température. En 2004, un groupe de travail sur l'harmonisation des moteurs appelé EHWG (de l'anglais « Engine Harmonization Working Group ») a établi que les conditions givrantes dues à la présence de grosses gouttelettes en surfusion (en anglais SLD pour « Supercooled Large Droplets »), à la présence de cristaux de glace, ou encore à la présence simultanée de SLD et de cristaux de glace étaient à l'origine de ces anomalies. L'Administration de l'Aviation Fédérale américaine FAA, de l'anglais « Federal Aviation Administration » ainsi que l'Agence de Sécurité de l'Aviation Européenne EASA, de l'anglais « European Aviation Safety Agency », ont introduit en novembre 2014 des modifications de la réglementation en vigueur pour enrayer la menace que représentent de telles conditions givrantes pour la sécurité des avions en vol. Cette nouvelle règlementation est décrite dans le document intitulé « Aircraft and Engine Certification Requirements for Supercooled Large Drop, Mixed Phase and Ice Crystal Icing Conditions, Federal Aviation Administration Docket No. FAA-2010-0636, Amendment Nos. 25-140 and 33-34, Nov. 4, 2014 » Le règlement CS25 et notamment son Annexe O (en anglais « 14 CFR part 25, Appendix O ») stipulent que les gouttelettes d'eau de diamètre compris entre 5 micromètres et 2300 micromètres doivent pouvoir être détectées. Le règlement CS33 et notamment son Annexe D (en anglais « 14 CFR part 33, Appendix D ») stipulent que les cristaux de glace de dimension comprise entre 5 micromètres et 2700 micromètres doivent pouvoir être détectés.

La technique d'imagerie laser interférométrique pour la détermination de la taille des gouttelettes, généralement appelée technique ILIDS de l'anglais « Interferometric Laser Imaging for Droplet Sizing », mise au point il y a environ 30 ans, permet de mesurer la taille des gouttelettes sphériques dans un plan (analyse en 2 dimensions). Selon cette technique les gouttelettes d'eau sont éclairées par une nappe laser polarisée à un angle d'observation spécifique. Deux points lumineux, appelés points de gloire, sont visibles à la surface des gouttelettes. Ces points de gloire créent un motif d'interférences ayant la forme de franges parallèles quand ils sont imagés dans un plan en dehors du plan focal d'un système optique. L'interfrange, c'est-à-dire la distance entre deux franges successives, est inversement proportionnelle à la distance entre ces deux points de gloire. Ainsi, une mesure de l'interfrange permet de déterminer le diamètre des gouttelettes.

Cette technique a également été utilisée pour déterminer une dimension d'une particule solide comme décrit dans les documents « Z. ULANOWSKI et al. Retrieving the size of particles with rough and complex surfaces from two-dimensional scattering patterns. Journal of Quantitative Spectroscopy and Radiative Transfer. 2012 » et « D. CHICEA. Biospeckle size and contrast measurement application in particle sizing and concentration assessment. Biophysics, September 12, 2006 ». Selon ces documents, lorsqu'un cristal de glace solide de forme quelconque et de surface rugueuse est éclairé par une nappe laser, une multitude de points de gloire sont visibles sur la surface du cristal. L'image en dehors du plan focal montre une image de tavelures (en anglais « speckle »). La taille du grain de tavelure est inversement proportionnelle à la plus grande dimension du cristal de glace visible.

Toutefois, l'imagerie interférométrique en défaut de mise au point ILIDS permet de mesurer des gouttes d'eau ou des cristaux de glace dont les dimensions varient dans un rapport d'environ une décade uniquement, notamment en raison de la grande dimension des gouttelettes d'eau et/ou des cristaux de glace par rapport aux résolutions d'imageurs existants sur le marché.

US 2008/231854 A1 décrit un dispositif utilisant deux sources laser pour déterminer la taille des particules s'écoulant à travers un petit tube. Cet appareil permet d'observer une seule particule à la fois avec deux plages de grossissement différentes et est utilisé pour trier les particules.

Or, la dimension des gouttes d'eau et des cristaux de glace présents dans l'atmosphère varie entre 5 $\mu$m et 2 700 $\mu$m. Cette plage de dimension est bien supérieure à la plage de dimension pouvant être déterminée par l'imagerie interférométrique classique.

L'invention a pour but de proposer un dispositif de détermination de la teneur en eau dans l'atmosphère qui satisfasse aux exigences de sécurité en vol établies par la règlementation FAR et qui satisfassent aux exigences de fiabilité et de robustesse liées à l'aéronautique et notamment une résistance aux fortes vibrations, une durée de vie supérieure à 30 ans ainsi que la possibilité de fonctionner dans une gamme de température de -55 °C à +70°C.

A cet effet, l'invention a pour objet un ensemble comportant un aéronef et un dispositif de détermination de la teneur en eau dans l'atmosphère comportant:

- un émetteur laser propre à émettre un faisceau laser destiné à éclairer des particules
- un premier imageur ayant un premier angle de collection propre à capturer au moins une première image représentative de particules comprises dans une première gamme de dimensions, et

- un deuxième imageur ayant un deuxième angle de collection propre à capturer au moins une deuxième image représentative de particules d'une deuxième gamme de dimensions, et

- une unité de traitement en liaison de communication avec le premier imageur, et le deuxième imageur, l'unité de traitement étant propre à traiter les première et deuxième images,

caractérisé en ce que l'émetteur laser le premier et le deuxième imageur sont placés à l'intérieur du fuselage de l'aéronef et pointent vers l'extérieur au travers d'un hublot et en ce que le faisceau laser est polarisé et est propre à éclairer des particules d'eau et/ou des particules de glaces présentes dans l'atmosphère, et en ce que le premier et le deuxième imageurs sont en défaut de mise au point, la première et la deuxième images étant formées par diffusion du faisceau laser sur les particules d'eau et/ou les particules de glaces, l'unité de traitement étant apte à déterminer la teneur en eau dans l'atmosphère.

Il comporte en outre un deuxième imageur en défaut de mise, le deuxième imageur au point ayant un deuxième angle de collection, le deuxième imageur étant propre à capturer au moins une deuxième image représentative de particules d'une deuxième gamme de dimensions, l'unité de traitement est en liaison de communication avec le deuxième imageur, l'unité de traitement étant propre à traiter les première et deuxième images pour déterminer la teneur en eau dans l'atmosphère.

Avantageusement selon l'invention, l'emploi de deux ou plusieurs imageurs permet de mesurer une population de particules ayant une gamme de dimensions supérieure à la gamme de dimension couverte par la technologie ILIDS et permet ainsi de pallier l'inconvénient de l'état de la technique.

Avantageusement, ce dispositif de détermination est fiable et robuste.

Suivant des modes particuliers de réalisation, le dispositif de détermination comporte l'une ou plusieurs des caractéristiques suivantes :

- Le faisceau laser présente un profil d'intensité rectangulaire uniforme. Avantageusement, ce type de faisceau permet d'éclairer l'ensemble du volume d'échantillonnage de façon homogène.

- Le faisceau laser présente une forme de nappe qui s'étend dans un plan d'émission, et dans lequel ledit faisceau laser diverge selon une direction perpendiculaire au plan d'émission.
  Avantageusement, cette forme divergente permet d'obtenir des épaisseurs de volumes d'échantillonnage différentes.

- Le faisceau laser présente une forme de nappe qui s'étend dans un plan d'émission, et dans lequel ledit faisceau laser converge selon une direction perpendiculaire au plan d'émission dans une zone proche de l'émetteur laser, et diverge selon une direction perpendiculaire au plan d'émission dans une zone distante de l'émetteur laser.
  Avantageusement, cette forme convergente puis divergente permet d'adapter plus finement les épaisseurs des volumes d'échantillonnage.

- Le premier imageur présente un angle de champ compris entre 2° et 10° et le deuxième imageur présente un angle de champ compris entre 10° et 25°.
  Avantageusement, le premier imageur permet de prendre en compte une forte concentration de petites particules. Tandis que le deuxième imageur permet de prendre en compte une faible concentration de grosses particules.

- Le faisceau laser présente un axe d'émission, le premier imageur comprenant une pupille et un axe de diffusion, le deuxième imageur comprenant une pupille et un axe de diffusion et dans lequel la longueur de l'axe de diffusion du premier imageur définie entre la pupille du premier imageur et la l'axe de d'émission est comprise entre 50 millimètres et 200 millimètres, et la longueur de l'axe de diffusion du deuxième imageur définie entre la pupille du deuxième imageur et l'axe de d'émission est comprise entre 100 millimètres et 300 millimètres.

- Le dispositif comporte en outre un troisième imageur en défaut de mise au point ayant un troisième angle de collection propre à capturer au moins une troisième image représentative de particules comprises dans une troisième gamme de dimensions, et en ce que l'unité de traitement est en liaison de communication avec le troisième imageur, l'unité de traitement étant propre à traiter les images capturées par le premier, le deuxième et le troisième imageurs pour déterminer la teneur en eau présente dans l'atmosphère.
  Avantageusement, l'utilisation de trois imageurs permet de déterminer la teneur en eau dans l'atmosphère sur l'intégralité de la gamme de dimensions de particules liquides et solides spécifiée par la règlementation aéronautique.

- Le faisceau laser présente une forme de nappe qui s'étend dans un plan d'émission, et dans lequel la dimension moyenne du faisceau laser selon une direction perpendiculaire au plan d'émission est définie selon la relation suivante :

$$t\,(di) = 2 \times \ln\,((di + 150)/150)$$

Dans laquelle :

- $t$ est la dimension du faisceau laser mesurée selon une direction perpendiculaire au plan d'émission, et

- $di$ est la dimension des particules mesurée dans le plan perpendiculaire à l'axe de diffusion.

La présente invention concerne également un dispositif de détection de conditions atmosphériques givrantes. Ce dispositif de détection comporte un dispositif de détermination de la teneur en eau défini tel que mentionné ci-dessus ; une entrée propre à recevoir une valeur de température de l'air extérieure ; et dans lequel l'unité de traitement est propre à détecter des conditions atmosphériques givrantes en fonction de la teneur en eau déterminée et de la valeur de la température de l'air extérieure.

La présente invention concerne en outre un procédé de détermination de la teneur en eau dans l'atmosphère par traitement d'images acquises par un dispositif de détermination comportant un émetteur laser propre à émettre un faisceau laser destiné à éclairer des particules d'eau et de glace présentes dans l'atmosphère, un premier et un deuxième imageur propres à capturer au moins une première image et respectivement une deuxième image contenant des interférogrammes représentatifs des particules, et une unité de traitement en liaison de communication avec premier et le deuxième imageur, le procédé comportant les étapes suivantes :

- séparer les interférogrammes du fond de la première image et du fond de la deuxième image;
- rechercher les interférogrammes représentatifs des particules d'eau et les interférogrammes représentatifs des particules de glace ;
- déterminer les dimensions des particules d'eau imagées sur ladite première image et ladite deuxième image par calcul de la Transformée de Fourier des interférogrammes; - déterminer les dimensions des particules de glace imagées sur ladite première image et ladite deuxième image en réalisant une fonction d'autocorrélation à deux dimensions des motifs de tavelure des interférogrammes;
- calculer la masse de particules par unité de volume des particules imagées sur ladite première image et ladite deuxième image à partir des dimensions déterminées; et
- déterminer la teneur en eau dans l'atmosphère par addition de la masse calculée pour la première image et de la masse calculée pour la deuxième image.

La présente invention concerne également un procédé de détection des conditions atmosphérique givrantes. Ce procédé comporte les étapes suivantes:

- déterminer la teneur en eau par mise en oeuvre du procédé de détermination décrit ci-dessus ;
- réceptionner une valeur de température extérieure ;
- détecter des conditions atmosphériques givrantes à partir de la teneur en eau et de la valeur de température extérieure.

Enfin, l'invention concerne un programme d'ordinateur comportant des instructions pour mettre en oeuvre le procédé de détermination décrit ci-dessus, lorsqu'il est exécuté par un processeur et un programme d'ordinateur comportant des instructions pour mettre en oeuvre le procédé de détection décrit ci-dessus, lorsqu'il est exécuté par un processeur.

L'invention sera mieux comprise à la lecture de la description qui va suivre, donnée uniquement à titre d'exemple et faite en se référant aux figures sur lesquelles :

- la figure 1 qui est une vue schématique du dispositif de détermination de la teneur en eau selon la présente invention ;
- la figure 2 est une vue schématique de dessus du dispositif de détermination illustré sur la figure 1 ;
- la figure 3 est une vue perspective schématique de l'émetteur laser et du faisceau laser du dispositif de détermination illustré sur la figure 1 ;
- la figure 4 est une vue perspective schématique d'un émetteur laser et d'un faisceau laser selon une variante de réalisation du dispositif de détermination selon l'invention ;
- la figure 5 est une vue en perspective du dispositif de détection de conditions atmosphériques givrantes selon la présente invention ;

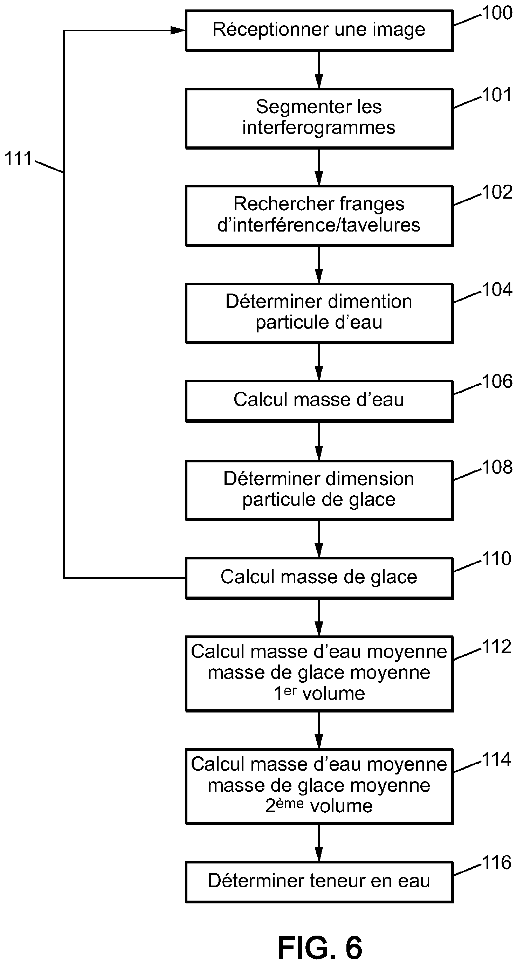

- la figure 6 est un diagramme représentatif des étapes du procédé de détermination selon l'invention ; et
- la figure 7 est une représentation schématique d'un exemple d'image acquise par le premier ou le deuxième imageur du dispositif de détermination selon la présente invention ; et
- la figure 8 est un diagramme représentatif des étapes du procédé de détection selon l'invention.

Dans la présente demande de brevet, le terme « particule » a été utilisé pour désigner à la fois des gouttelettes d'eau et des cristaux de glace. Le terme « dimension di » a été utilisé pour définir la taille d'une particule dans le plan perpendiculaire à l'axe de diffusion tel que défini ci-après.

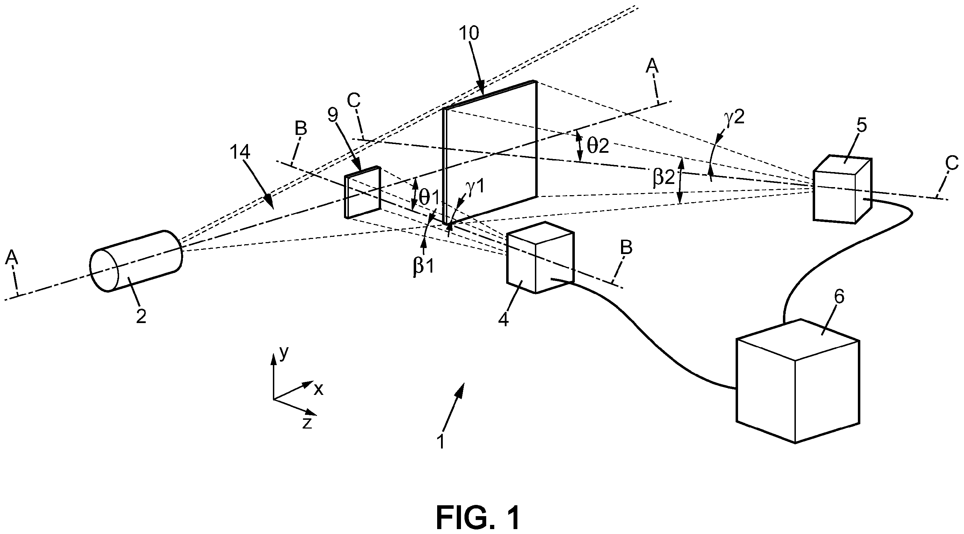

Le dispositif de détermination 1 de la teneur en eau dans l'atmosphère selon l'invention est représenté sur la figure 1. La teneur en eau est la quantité d'eau que contient un volume d'air. Ce dispositif de détermination 1 permet d'acquérir des images par imagerie interférométrique en défaut de mise au point (ILIDS). Ce dispositif de détermination 1 est embarqué dans un aéronef en vol.

En référence à la figure 1, ce dispositif de détermination 1 comprend :

- un émetteur laser 2 propre à émettre un faisceau laser 14 pulsé,
- un premier imageur 4 en défaut de mise au point propre à capturer des images de particules 11, 12 ayant une dimension comprise dans une première gamme de dimension ;
- un deuxième imageur 5 en défaut de mise au point propre à capturer des images de particules 11, 12 ayant une dimension comprise dans une deuxième gamme de dimension ; et

- une unité de traitement 6 en liaison de communication avec le premier 4 et le deuxième 5 imageurs, par exemple en liaison de communication filaire.

L'émetteur laser 2, le premier 4 et le deuxième 5 imageurs sont, par exemple, placés à l'intérieur du fuselage d'un aéronef et pointent vers l'extérieur au travers d'un hublot.

L'émetteur laser 2 comprend une unité non représentée propre à émettre un faisceau laser ayant un axe d'émission A-A et un dispositif optique 7, 8 apte à focaliser le faisceau laser émis en une nappe. Cette nappe s'étend dans un plan, dit plan d'émission (x, y), en considérant le repère orthogonal direct (x, y, z) représenté sur la figure 1.

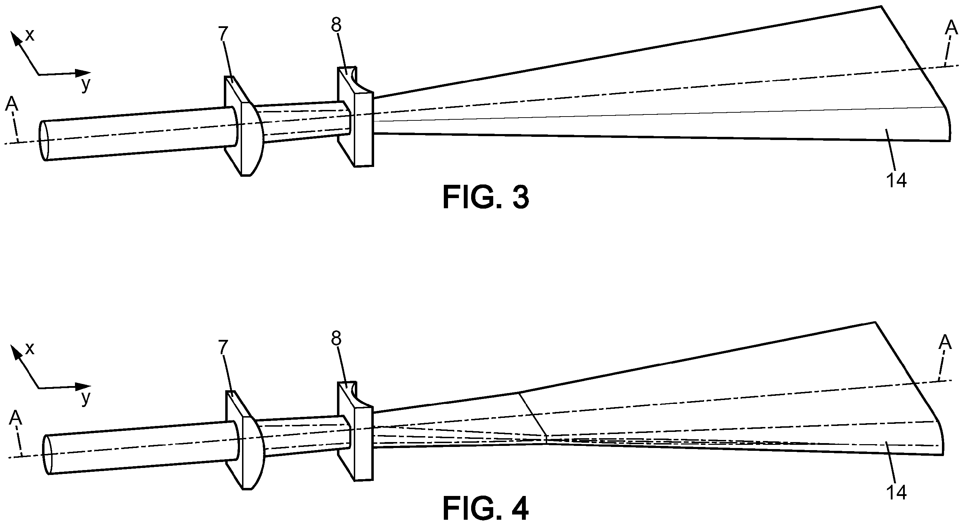

De préférence, le faisceau laser 14 présente une forme qui, diverge selon une direction perpendiculaire au plan d'émission (x, y) depuis une partie de l'espace à proximité de l'émetteur laser vers une partie de l'espace plus éloignée de l'émetteur laser 2 comme représentée sur la figure 3.

Comme visible sur la figure 3, cette forme est par exemple obtenue par un système optique comportant deux lentilles cylindriques 7, 8.

La détermination du nombre de particules 11, 12 ayant une dimension comprise dans la première gamme de dimension est réalisée dans un premier volume d'échantillonnage 9 défini par l'intersection du faisceau laser 14 et du champ de vision du premier imageur 4. De la même façon, la détermination du nombre de particules 11, 12 ayant une dimension comprise dans la deuxième gamme de dimension est réalisée dans un deuxième volume d'échantillonnage 10 défini par l'intersection du faisceau laser 14 et du champ de vision du deuxième imageur 5.

La hauteur et la largeur du premier volume d'échantillonnage 9 sont déterminées par les angles de champ $\gamma1$ et $\beta1$ du premier imageur 4 ainsi que par la distance entre le premier imageur 4 et le premier volume d'échantillonnage 9. Les angles de champ $\gamma1$ et $\beta1$ du premier imageur 4 sont par exemple compris entre 2° et 10°.

De la même façon, la hauteur et la largeur du deuxième volume d'échantillonnage 10 sont données par les angles de champ $\gamma2$ et $\beta2$ du deuxième imageur 5 ainsi que par la distance entre le deuxième imageur 5 et le deuxième volume d'échantillonnage 10.

Les angles de champ $\gamma2$ et $\beta2$ du deuxième imageur sont par exemple compris entre 10° et 25°.

Avantageusement, la forme divergente du faisceau laser 14 permet d'adapter l'épaisseur (dimension selon l'axe z) du premier volume d'échantillonnage 9 ainsi que l'épaisseur du deuxième volume d'échantillonnage 10 en fonction de la dimension et de la concentration des particules que l'on souhaite mesurer. De manière générale, le premier volume d'échantillonnage 9 qui est positionné proche de l'émetteur laser 2, est utilisé pour mesurer des particules de petites dimensions. Le deuxième volume d'échantillonnage 10 qui est positionné à une distance plus éloignée de l'émetteur laser 2, est utilisé pour mesurer des particules de plus grandes dimensions.

Par exemple, un premier volume d'échantillonnage 9 ayant une épaisseur comprise entre 0.25 et 1.4 millimètres permet d'échantillonner des particules ayant une dimension di comprises entre 15 et 150 micromètres.

Par exemple, un deuxième volume d'échantillonnage 10 ayant une épaisseur comprise entre 2 et 5 millimètres permet d'échantillonner des particules ayant une dimension di comprises entre 150 et 1 500 micromètres.

Avantageusement, l'épaisseur des volumes d'échantillonnage 9, 10 doit être supérieure à la dimension maximale des particules que l'on souhaite mesurer. L'épaisseur ne doit cependant pas être trop élevée afin de réduire la probabilité de superposition des particules dans le champ de vue. Des expérimentations ont conduit à l'établissement d'une loi empirique définissant l'épaisseur moyenne du volume d'échantillonnage selon une direction (z) perpendiculaire au plan d'émission (x, y). Cette épaisseur moyenne est également la dimension moyenne du faisceau laser 14 selon une direction (z). Elle est définie par la relation suivante :

$$ t \ (di) = 2 \times \ln \ ((di + 150)/150) $$

Dans laquelle :

- t est la dimension du faisceau laser (14) mesurée selon une direction (z) perpendiculaire au plan d'émission (x, y), et
- di est la dimension en micromètres des particules mesurée dans le plan perpendiculaire à l'axe de diffusion.

Par exemple, le faisceau laser 14 devrait avoir une épaisseur t égale à environ 1 millimètre pour mesurer des particules ayant des dimensions comprises une première gamme de dimensions allant de 10 micromètres à 100 micromètres. Le faisceau laser 14 devrait avoir une épaisseur t égale à environ 4 millimètres pour mesurer des particules ayant des dimensions comprises dans une deuxième gamme de dimensions allant de 100 micromètres à 1 000 micromètres.

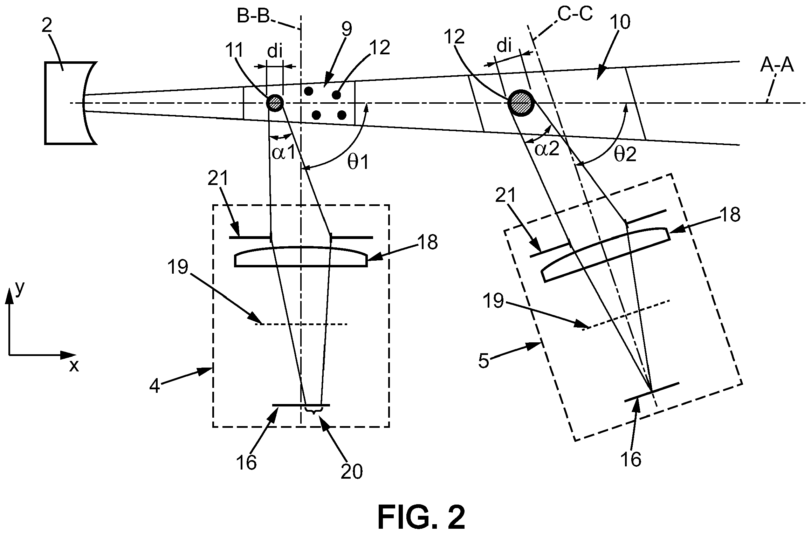

Dans le mode de réalisation représenté sur les figures 1 et 2, le premier volume d'échantillonnage 9 et le deuxième volume d'échantillonnage 10 sont distincts l'un de l'autre pour des raisons liées à l'encombrement du dispositif. La détermination de la teneur en eau reste néanmoins exacte car ces volumes d'échantillonnage sont statistiquement traversés par les mêmes particules par unité de volume donnée.

L'émetteur laser 2 est propre à générer un faisceau laser 14 ayant un profil d'intensité rectangulaire uniforme généralement appelé en anglais « top-hat ». Le faisceau laser 14 est polarisé. Dans le cas où le champ électrique du faisceau laser 14 évolue dans un plan (x, z), la polarisation est dite parallèle. Le plan (x, z) contient l'axe de diffusion B-B du premier imageur 4 et l'axe de diffusion C-C du deuxième imageur 5. La polarisation est dite perpendiculaire dans le cas ou le champ électrique évolue dans le plan d'émission (x, y). La polarisation est choisie en fonction des angles de diffusion. Par exemple, dans le mode de réalisation décrit, les angles de diffusion θ1 et θ2 sont de 90° et respectivement de 120° et la polarisation est parallèle.

La longueur d'onde du laser est, par exemple, égale à 532 nm. La fréquence de pulsation du laser est synchronisée à la fréquence d'acquisition des images par le premier 4 et le deuxième 5 imageurs.

Le premier 4 et le deuxième 5 imageurs sont, par exemple, constitués par des caméras CCD.

Le premier imageur 4 possède un axe optique B-B qui forme un angle $\theta_1$ avec le plan d'émission (x, y) de la nappe laser. Le deuxième imageur 5 possède un axe optique C-C qui forme un angle $\theta_2$ avec le plan d'émission (x, y) de la nappe laser. Ces angles $\theta_1$ et $\theta_2$ sont généralement appelés angles de diffusion.

Les angles de diffusion $\theta_1$ et $\theta_2$ sont fixes. Ils sont prédéterminés de manière à obtenir pour chaque particule d'eau des points de gloire ayant des intensités équivalentes. Les angles de diffusion $\theta_1$ et $\theta_2$ dépendent également de la longueur d'onde et de la polarisation du laser.

Dans l'exemple de réalisation représenté sur la figure 1, la longueur d'onde du laser est égale à 532 nanomètres et les angles de diffusion $\theta_1$ et $\theta_2$ sont différents l'un de l'autre. L'angle de diffusion θ1 est, par exemple, égal à 90 ° et l'angle de diffusion θ2 est, par exemple, égal à 120°. L'angle de diffusion θ1 de 90° permet de mesurer des particules qui sont dans le premier volume d'échantillonnage 9 et qui ont une dimension comprise dans la première gamme de dimensions. L'angle de diffusion θ2 de 120° permet de mesurer des particules qui sont dans le deuxième volume d'échantillonnage 10 et qui ont une dimension comprise dans la deuxième gamme de dimension.

En référence à la figure 2, le premier 4 et le deuxième 5 imageurs comprennent, chacun, un système optique convergent 18 de focale F, une pupille 21 et un plan d'acquisition d'images 19 situé en amont du plan focal 16 du système optique convergent 18.

On appelle "défocalisation" la distance entre le plan d'acquisition d'images 19 et le plan focal 16.

Le premier imageur 4 est propre à capturer des images formées par la diffusion du faisceau laser 14 sur les particules situées dans le premier volume d'échantillonnage 9. Le deuxième imageur 5 est propre à capturer des images formées par la diffusion du faisceau laser 14 sur les particules situées dans le deuxième volume d'échantillonnage 10. Les particules imagées par le premier 4 et le deuxième 5 imageurs sont les particules d'eau et les particules de glace contenues dans le premier et respectivement le deuxième volume d'échantillonnage.

Chaque particule éclairée par le faisceau laser réémet une portion de ce faisceau dans la totalité de l'espace. Tandis que le diagramme de diffusion d'une particule circulaire est prédictible et décrit par la théorie de Mie, la diffusion par une particule solide constituée d'une multitude de facettes n'est plus déterministe. L'imageur en défaut de mise au point permet de récupérer une partie du faisceau laser diffusé par la particule (fonction de diffusion angulaire) afin de l'analyser.

La pupille 21 du système optique du premier imageur et la longueur de l'axe de diffusion B-B du premier imageur 4 définie entre la pupille 21 du premier imageur et l'axe de d'émission A-A définissent un cône. L'angle au sommet de ce cône est appelé angle de collection α1. La valeur de cet angle de collection est égale à :

$$\alpha1 = \operatorname{atan}(\Phi1/D1)$$

dans laquelle

- atan est la fonction mathématique arc-tangente,
- Φ1 est le diamètre de la pupille 21 du premier imageur 4, et
- D1 est la longueur de l'axe de diffusion B-B comprise entre la pupille 21 du premier imageur et l'axe de d'émission A-A.

De la même façon, l'angle de collection α2 est défini par la relation

$$\alpha2 = \operatorname{atan}(\Phi2/D2)$$

dans laquelle :

- atan est la fonction mathématique arc-tangente,
- Φ2 est le diamètre de la pupille 21 du deuxième imageur 5, et
- D2 est la longueur de l'axe de diffusion C-C compris entre la pupille 21 du deuxième imageur 5 et l'axe de d'émission A-A.

Ces angles de collection $\alpha1$ et $\alpha2$ sont illustrés sur la figure 2.

Les angles de champ $\gamma1$, $\gamma2$, $\beta1$ et $\beta2$, la défocalisation, la distance focale F du système optique convergent, les angles de collection $\alpha1$ et $\alpha2$, la distance entre le faisceau laser et chacun des imageurs, ainsi que la résolution spatiale des premier 4 et deuxième 5 imageurs sont adaptés aux dimensions et aux concentrations des particules que l'on souhaite mesurer. Ils sont appelés ci-après paramètres d'acquisition. Les paramètres d'acquisition du premier 4 et du deuxième 5 imageurs sont donc différents les uns des autres. Sur les zones sensibles de chaque imageur, la dimension des interférogrammes 22 représentatifs des particules d'eau et des particules de glace est invariante quelque soit la dimension de ces particules d'eau 11 et de ces particules de glace 12. Cette dimension des interférogrammes est fixée par les paramètres d'acquisition.

Par exemple, dans le mode réalisation représenté (laser à 532 nm, faisceau de polarisation rectiligne parallèle, angle de diffusion du premier imageur : θ1=90°, angle de diffusion du second imageur : θ2=120), les paramètres d'acquisition suivants peuvent être utilisés :

- angles de collection du premier imageur : $\alpha1 = 4.58°$,
- angles de collection du second imageur : $\alpha2 = 2.18°$,
- épaisseur de la nappe au centre du premier volume d'échantillonnage: 500 $\mu$m,
- épaisseur t du faisceau au centre du deuxième volume d'échantillonnage égale à 3mm,
- angle de champ $\gamma1$ et angle de champ $\beta1$ du premier imageur égaux à 7.5°,
- longueur D1 de l'axe de diffusion B-B compris entre la pupille 21 du premier imageur et l'axe de d'émission A-A, est égale à 152 mm
- angle de champ $\gamma2$ et angle de champ $\beta2$ du second imageur égaux à 17,2°,
- longueur D2 de l'axe de diffusion C-C compris entre la pupille 21 du premier imageur et l'axe de d'émission A-A, est égale à 194mm.

L'unité de traitement 6 comprend une unité de calcul et une mémoire propre à stocker des instructions pour mettre en oeuvre un procédé de détermination de la teneur en eau selon l'invention.

L'unité de traitement 6 est propre à recevoir au moins une première image 36 acquise par le premier imageur 4 et au moins une deuxième image acquise par le deuxième imageur 5 et à traiter la première image et la deuxième image à partir du procédé de détermination, décrit ci-après.

L'unité de traitement 6 est apte à générer une information relative à la teneur en eau dans l'atmosphère à partir du traitement de la première image issue du premier imageur 4 et du traitement de la deuxième image issue du deuxième imageur 5.

En variante, les angles de diffusion θ1 et θ2 peuvent être identiques et égaux à 90 ° avec un émetteur laser 2 émettant un faisceau ayant une longueur d'onde égale à 532 nanomètres.

Selon une autre variante, l'émetteur laser 2 émet un faisceau ayant une longueur d'onde égale à 1550 nanomètres, l'angle de diffusion θ1 est égal à 90° et l'angle de diffusion θ2 est égal à 130°.

En variante, le premier volume d'échantillonnage 9 pourrait être compris dans le deuxième volume d'échantillonnage. Un système optique adapté permettrait alors de capter les images prises par chacun des imageurs.

Selon une variante représentée sur la figure 4, la nappe laser 14 converge selon une direction perpendiculaire au plan d'émission (x, y) dans une partie de l'espace à proximité de l'émetteur laser 2, puis diverge dans une partie de l'espace plus éloignée de l'émetteur laser 2. Avantageusement, la forme convergente puis divergente du laser permet d'adapter l'épaisseur (dimension selon l'axe z) du premier volume d'échantillonnage 9 ainsi que l'épaisseur du deuxième volume d'échantillonnage 10 en fonction de la dimension et de la concentration des particules que l'on souhaite mesurer.

En variante, le dispositif de détermination selon l'invention comporte un premier émetteur laser propre à générer une nappe laser ayant une première épaisseur (dimension selon l'axe z) et un deuxième émetteur laser propre à générer une nappe laser ayant une deuxième épaisseur ; la deuxième épaisseur ayant une plus grande dimension que la première épaisseur.

Selon une variante non représentée, le dispositif de détermination selon un second mode de réalisation comprend un premier, un second et un troisième imageurs. Ces trois imageurs permettent de déterminer la dimension de l'ensemble des particules atmosphériques.

Par exemple, dans ce mode de réalisation, les paramètres d'acquisition du premier imageur sont définis pour déterminer la dimension des particules ayant une dimension comprise entre 5 $\mu$m et 50 $\mu$m. Dans ce cas, l'épaisseur du premier volume d'échantillonnage serait de 0,6 millimètres. Les paramètres d'acquisition du deuxième imageur sont définis pour déterminer la dimension des particules ayant une dimension comprise entre 50 $\mu$m et 500 $\mu$m. Dans ce cas, l'épaisseur du deuxième volume d'échantillonnage serait de 3 millimètres. Les paramètres d'acquisition du troisième imageur sont définis pour déterminer la dimension des particules ayant une dimension comprise entre 500 $\mu$m et 5 000 $\mu$m. Dans ce cas, l'épaisseur du troisième volume d'échantillonnage serait de 7 millimètres.

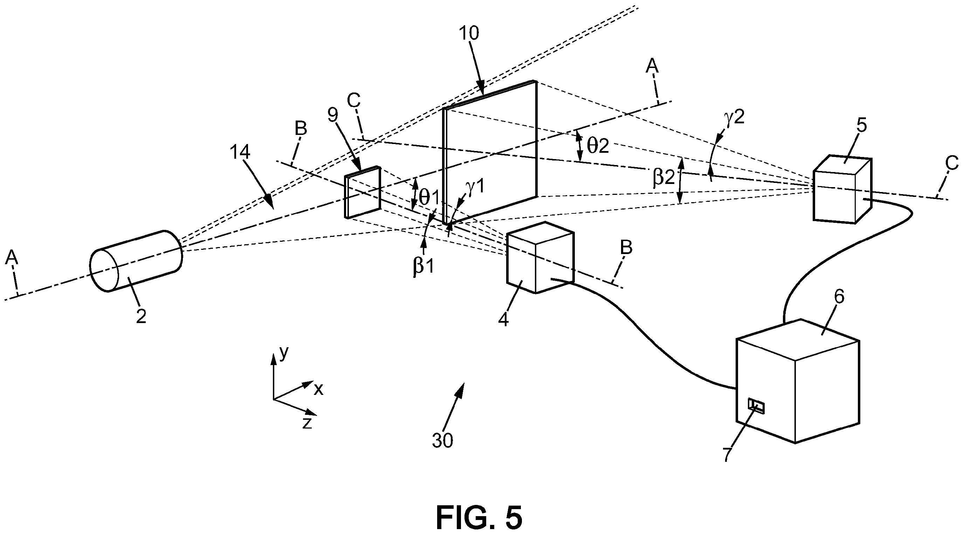

La présente invention concerne également un dispositif 30 de détection de conditions atmosphériques givrantes représenté sur la figure 5.

Ce dispositif de détection 30 comporte les mêmes éléments techniques que le dispositif de détermination 1 décrit ci-dessus en liaison avec les figures 1 à 4. Ces éléments techniques sont référencés par les mêmes références et ne seront pas décrits une nouvelle fois. Le dispositif de détection 30 est donc similaire au dispositif de détermination 1 à l'exception du fait que l'unité de traitement 6 de dispositif de détection 30 comporte en outre une entrée 7 propre à recevoir une valeur de température de l'air extérieure (en anglais «OAT pour Outside Air Temperature »). Cette valeur de température extérieure est par exemple fournie par un dispositif de mesure de température externe déjà existant dans l'aéronef. L'unité de traitement 6 du dispositif de détection est propre à détecter des conditions atmosphériques givrantes en fonction de la teneur en eau déterminée et de la valeur de la température de l'air extérieure réceptionné comme décrit dans le procédé de détection décrit ci-après.

Lorsque l'aéronef vole dans un nuage, les particules 11, 12 contenues dans le nuage traversent le premier 9 et le deuxième 10 volumes d'échantillonnage à la vitesse de l'avion.

Ces particules peuvent être constituées par des particules d'eau 11 c'est-à-dire des gouttelettes d'eau ou des particules de glace 12 c'est-à-dire des cristaux de glace.

L'imageur 4 capture une première image 36 des particules 11, 12 contenues dans le premier volume d'échantillonnage 9 par exemple tous les 1/20 de seconde. Simultanément (ou en parallèle), l'imageur 5 capture une deuxième image des particules contenues dans le deuxième volume d'échantillonnage 10.

Le procédé de détermination selon la présente invention est alors exécuté par l'unité de traitement 6 sur plusieurs premières images générées par le premier imageur 4, et sur plusieurs deuxièmes images générées par le deuxième imageur 5.

Plus le nombre d'images sur lesquelles le procédé de détermination sera exécuté est grand, plus le résultat sera représentatif de la nature globale du nuage et plus le temps de réponse du dispositif de détermination sera long. Le compromis entre précision du résultat et temps de réponse est négociable par l'utilisateur du dispositif de détermination.

Les étapes de traitement décrites ci-après sont mises en oeuvres sur chaque première image capturée par le premier imageur en prenant en compte les dimensions du premier volume d'échantillonnage 9 pour les étapes de calcul 106, 110 et 112.

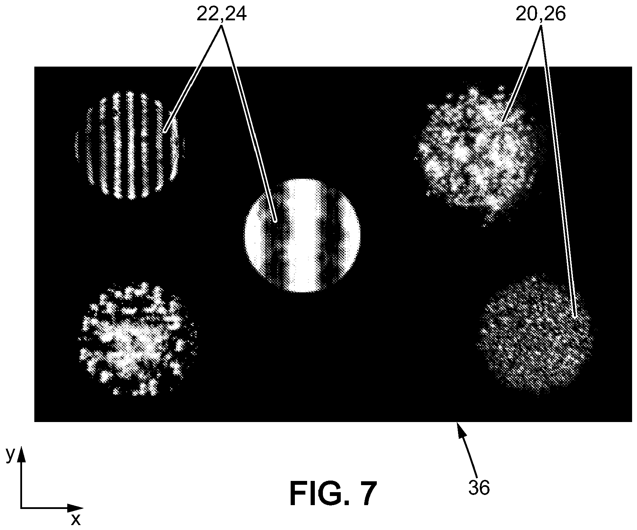

Au cours d'une première étape 100, une première image 36 est réceptionnée par l'unité de traitement 6. Un exemple d'une première image est représenté sur la figure 7. Cette première image 36 contient un nombre d'interférogrammes 22 égal au nombre de particules 11, 12 qu'il y a dans le premier volume d'échantillonnage au moment de la prise d'image. Les interférogrammes 22 se présentent tous sous la forme de disques de même diamètre dépendant des paramètres d'acquisitions, quelque soit la dimension des particules. Les disques contenant des franges d'interférence parallèles 24 correspondent à des particules d'eau 11. Les disques contenant des tavelures 26 (en anglais « speckle ») sont représentatives de particules de glace 12.

Au cours d'une étape 101 de segmentation, les interférogrammes sont séparés du fond de l'image.

A cet effet, un seuillage adaptatif est effectué sur l'ensemble de l'image 36 en fonction du niveau de gris moyen de l'image, suivi d'un filtrage médian. Une ouverture morphologique (une érosion suivie d'une dilatation) est ensuite réalisée pour éliminer les objets qui sont trop petits pour appartenir à un interférogramme de dimension fixe connue. Une série de dilatations successives est réalisée afin de connecter les éléments restants pour former les marqueurs des interférogrammes que l'on recherche. Les centres de ces marqueurs sont ensuite recherchés. L'image d'origine est ensuite masquée avec des disques dont les centres sont ceux des marqueurs. Ces disques présentent un diamètre identique à celui des interférogrammes. Ce diamètre est calculé à partir des paramètres d'acquisition.

Au cours d'une étape 102, les interférogrammes 22 représentatifs des particules d'eau 11 et des interférogrammes 22 représentatifs des particules de glace 12 sont recherchés. Pour chaque interférogramme segmenté à l'étape 101, la fonction d'autocorrélation selon l'axe y est calculée. Lorsque la largeur à mi-hauteur du pic d'autocorrélation obtenu est inférieure à un seuil défini alors cet interférogramme est représentatif d'une particule d'eau 11, sinon cet interférogramme est représentatif d'une particule de glace 12. Le seuil est défini en fonction des paramètres d'acquisition.

Pour chaque interférogramme 22 représentatif d'une particule d'eau, la dimension di de cette particule est calculée, au cours d'une étape 104. A cet effet, la transformée de Fourier de l'interférogramme est calculée, et l'interfrange en est déduit. Puis, la dimension di de la particule 11 d'eau est calculée à partir de cet interfrange en utilisant l'équation classique d'ILIDS décrite dans le document « G. Koenig, K. Anders, and A. Frohn. A new light-scattering technique to measure the diameter of periodically generated moving droplets. Journal of Aerosol Sciences, 17.157-167, 1986 ».

Au cours d'une étape 106, la masse d'eau du volume d'échantillonnage est calculée. Pour cela, le volume de chaque particule d'eau identifiée dans l'image est calculé à partir de la formule $\pi di^3/6$ où di est la dimension calculée au cours de l'étape 104. Puis, les volumes calculés pour chaque particule d'eau sont additionnés afin de déterminer le volume de l'ensemble des particules d'eau contenues dans le volume d'échantillonnage. La masse d'eau correspondant à ce volume est calculée en multipliant la masse volumique de l'eau par le volume de l'ensemble des particules d'eau. Enfin, cette masse d'eau est divisée par le volume d'échantillonnage défini en mètre cube.

Pour chaque interférogramme 22 de particule de glace 12 identifié à l'étape 102, la dimension di de cette particule de glace est mesurée au cours d'une étape 108, en réalisant une fonction d'autocorrélation à deux dimensions du motif de tavelure 26. Cette fonction d'autocorrélation permet d'obtenir une distribution en forme de pic. Puis, la largeur à mi-hauteur du pic est mesurée. La dimension di de la particule de glace 12 selon un plan parallèle au plan d'acquisition d'images 19, est évaluée à partir de cette largeur à mi-hauteur, comme décrit dans les publications scientifiques comme « D. CHICEA. Biospeckle size and contrast measurement application in particle sizing and concentration assessment. Biophysics, September 12, 2006 ».

Au cours d'une étape 110, la masse de glace du volume d'échantillonnage est calculée. Pour cela, le volume de chaque particule de glace identifiée dans l'image est calculé à partir de lois masses-diamètres en considérant la dimension di calculée au cours de l'étape 104, telles que celle proposée par Heymsfield dans « ANDREW J. HEYMSFIELD. Refinements to Ice Particle Mass Dimensional and Terminal Velocity Relationships for Ice Clouds. Part II: Evaluation and Parameterizations of Ensemble Ice Particle Sédimentation Velocities. Journal Of The Atmospheric Sciences 2006 ». Puis, les masses calculées pour chaque particule de glace sont additionnées afin de déterminer la masse de l'ensemble des particules de glace contenues dans le volume d'échantillonnage. Enfin, cette masse de glace est divisée par le volume d'échantillonnage défini en mètre cube.

Au cours d'une étape 111, le procédé retourne à l'étape 100 au cours de laquelle l'unité de traitement réceptionne une nouvelle première image 36.

Les étapes 100 à 110 sont répétées sur plusieurs premières images provenant du premier imageur 4.

Puis, au cours d'une étape 112, la masse d'eau moyenne du premier volume d'échantillonnage et la masse de glace moyenne du premier volume d'échantillonnage 9 sont calculées à partir des masses de glace et des masses d'eau calculées sur plusieurs premières images.

En parallèle, au cours d'une étape 114, la masse d'eau moyenne et la masse de glace moyenne du deuxième volume d'échantillonnage 10 sont calculées. A cet effet, les étapes de traitement 100 à 112 sont mises en oeuvre sur plusieurs deuxièmes images capturées par le deuxième imageur 5 en prenant en compte les dimensions du deuxième volume d'échantillonnage 10 pour les étapes de calcul 106, 110 et 112. La deuxième image est similaire à la première image. Elle n'a donc pas été représentée sur les figures.

Enfin, au cours étape 116, la teneur en eau dans l'atmosphère est déterminée en additionnant la masse d'eau moyenne et la masse de glace moyenne calculées au cours des étapes 112 et 114. Cette teneur en eau comporte la teneur en eau liquide LWC (de l'anglais « Liquid Water Content ») et la teneur en eau solide IWC (de l'anglais « Ice Water Content ») issues du premier 9 et du deuxième 10 volumes d'échantillonnage.

En variante, les étapes du procédé de détermination sont réalisées à partir d'une seule première image et d'une seule deuxième image.

La présente invention concerne également un procédé de détection des conditions atmosphériques givrantes. Ce procédé est mis en oeuvre par le dispositif de détection 30 illustré sur la figure 5.

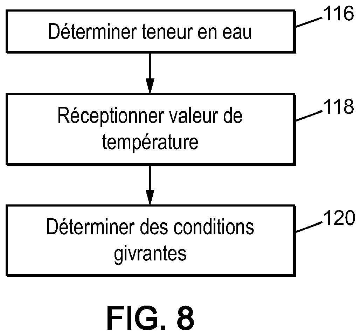

Ce procédé de détection est illustré sur la figure 8. Il comporte les mêmes étapes 100 à 116 que le procédé de détermination décrit ci-dessus. Il comporte en outre les étapes supplémentaires 118 et 120 décrites ci-après.

Au cours de l'étape 118, une valeur de température de l'air extérieur est réceptionnée par l'entrée 7 de l'unité de traitement 6.

Au cours de l'étape 120, la détection des conditions givrantes est réalisée à partir de la teneur en eau obtenue au cours de l'étape 116 et de la valeur de la température réceptionnée par l'entrée 7 en appliquant la réglementation en vigueur, notamment les normes CFR mentionnées précédemment.

**Revendications**

1. Ensemble comportant un aéronef et un dispositif de détermination (1) de la teneur en eau dans l'atmosphère comportant:

   - un émetteur laser (2) propre à émettre un faisceau laser (14) destiné à éclairer des particules
   - un premier imageur (4) ayant un premier angle de collection ($\alpha$1) propre à capturer au moins une première image (36) représentative de particules (11, 12) comprises dans une première gamme de dimensions, et
   - un deuxième imageur (5) ayant un deuxième angle de collection ($\alpha$2) propre à capturer au moins une deuxième image représentative de particules (11, 12) d'une deuxième gamme de dimensions, et
   - une unité de traitement (6) en liaison de communication avec le premier imageur (4), et le deuxième imageur (5), l'unité de traitement (6) étant propre à traiter les première et deuxième images,

   **caractérisé en ce que** l'émetteur laser (2) le premier et le deuxième imageur sont placés à l'intérieur du fuselage de l'aéronef et pointent vers l'extérieur au travers d'un hublot et **en ce que** le faisceau laser est polarisé et est propre à éclairer des particules d'eau (11) et/ou des particules de glaces (12) présentes dans l'atmosphère, et **en ce que** le premier (4) et le deuxième (5) imageurs sont en défaut de mise au point, la première et la deuxième images étant formées par diffusion du faisceau laser sur les particules d'eau (11) et/ou les particules de glaces (12), l'unité de traitement (6) étant apte à déterminer la teneur en eau dans l'atmosphère.

2. Ensemble selon la revendication 1, dans lequel le faisceau laser (14) présente un profil d'intensité rectangulaire uniforme.

3. Ensemble selon l'une quelconque des revendications 1 et 2, dans lequel le faisceau laser (14) présente une forme de nappe qui s'étend dans un plan d'émission (x,y), et dans lequel ledit faisceau laser (14) diverge selon une direction perpendiculaire au plan d'émission (x,y).

**4.** Ensemble selon l'une quelconque des revendications 1 et 2, dans laquelle, le faisceau laser (14) présente une forme de nappe qui s'étend dans un plan d'émission (x, y), et dans lequel ledit faisceau laser (14) converge selon une direction perpendiculaire au plan d'émission (x, y) dans une zone proche de l'émetteur laser (2), et diverge selon une direction perpendiculaire au plan d'émission (x, y) dans une zone distante de l'émetteur laser (2).

**5.** Ensemble selon l'une quelconque des revendications 1 à 4, dans lequel le premier imageur (4) présente un angle de champ ($\beta$1) compris entre 2° et 10° et le deuxième imageur (5) présente un angle de champ ($\beta$2) compris entre 10° et 25°.

**6.** Ensemble selon l'une quelconque des revendications 1 à 5, dans lequel le faisceau laser (2) présente un axe d'émission (A-A), le premier imageur (4) comprenant une pupille (21) et un axe de diffusion (B-B), le deuxième imageur (5) comprenant une pupille (21) et un axe de diffusion (C-C) et dans lequel la longueur de l'axe de diffusion (B-B) du premier imageur (4) définie entre la pupille (21) du premier imageur (4) et la l'axe de d'émission (A-A) est comprise entre 50 millimètres et 200 millimètres, et la longueur de l'axe de diffusion (C-C) du deuxième imageur (5) définie entre la pupille (21) du deuxième imageur (5) et l'axe de d'émission (A-A) est comprise entre 100 millimètres et 300 millimètres.

**7.** Ensemble selon l'une quelconque des revendications 1 à 6, qui comporte en outre un troisième imageur en défaut de mise au point ayant un troisième angle de collection propre à capturer au moins une troisième image représentative de particules comprises dans une troisième gamme de dimensions, et en ce que l'unité de traitement (6) est en liaison de communication avec le troisième imageur, l'unité de traitement étant propre à traiter les images capturées par le premier, le deuxième et le troisième imageurs pour déterminer la teneur en eau présente dans l'atmosphère.

**8.** Ensemble selon l'une quelconque des revendications 1, 2, 5 à 7, dans lequel dans lequel le faisceau laser (14) présente une forme de nappe qui s'étend dans un plan d'émission (x,y), et dans lequel la dimension moyenne du faisceau laser (14) selon une direction (z) perpendiculaire au plan d'émission (x, y) est définie par la relation suivante :

$$t\,(di) = 2 \times \ln\,((di + 150)/150)$$

Dans laquelle :

- t est la dimension du faisceau laser (14) mesurée selon une direction (z) perpendiculaire au plan d'émission (x, y), et
- di est la dimension des particules mesurée dans le plan perpendiculaire à l'axe de diffusion.

**9.** Ensemble selon la revendication 1, dans lequel le faisceau laser (14) présente une forme de nappe qui s'étend dans un plan d'émission (x,y) et dans lequel le premier et le deuxième imageurs (4, 5) possèdent chacun un axe optique (B-B, C-C) qui forme un angle de diffusion ($\theta_1$, $\theta_2$) avec le plan d'émission (x, y) de la nappe laser, et dans lequel les angles de diffusion ($\theta_1$, $\theta_2$) sont égaux à 90 ° et à 120°

**10.** Ensemble comportant un aéronef et un dispositif de détection (30) de conditions atmosphériques givrantes qui comporte :

- un ensemble défini selon l'une quelconque des revendications 1 à 9;
- une entrée (7) propre à recevoir une valeur de température de l'air extérieure,

et dans lequel l'unité de traitement (6) est propre à détecter des conditions atmosphériques givrantes en fonction de la teneur en eau déterminée et de la valeur de la température de l'air extérieure.

**11.** Procédé de détermination de la teneur en eau dans l'atmosphère par traitement d'images (36) acquises par un dispositif de détermination (1) comportant un émetteur laser (2) propre à émettre un faisceau laser (14) destiné à éclairer des particules d'eau et de glace présentes dans l'atmosphère, un premier (4) et un deuxième (5) imageur propres à capturer au moins une première image (36) et respectivement une deuxième image contenant des interférogrammes représentatifs des particules (11, 12), et une unité de traitement (6) en liaison de communication avec premier (4) et le deuxième imageur (5), le procédé comportant les étapes suivantes :

- séparer (101) les interférogrammes (22) du fond de la première image (4) et du fond de la deuxième image (5) ;
- rechercher (102) les interférogrammes (22) représentatifs des particules d'eau et les interférogrammes (22) représentatifs des particules de glace ;
- déterminer (104) les dimensions des particules (11, 12) d'eau imagées sur ladite première image (36) et ladite deuxième image par calcul de la Transformée de Fourier des interférogrammes (22);
- déterminer (108) les dimensions des particules (11, 12) de glace imagées sur ladite première image (36) et ladite deuxième image en réalisant une fonction d'autocorrélation à deux dimensions des motifs de tavelure de l'interférogramme (22);

- calculer (106, 110, 112, 114) la masse des particules par unité de volume des particules imagées sur ladite première image et ladite deuxième image à partir des dimensions déterminées; et

- déterminer (116) la teneur en eau dans l'atmosphère par addition de la masse calculée pour la première image et de la masse calculée pour la deuxième image.

12. Procédé de détection des conditions atmosphérique givrantes, **caractérisé en ce qu**'il comporte les étapes suivantes:

- déterminer (116) la teneur en eau par mise en oeuvre du procédé de détermination selon la revendication 11 ;
- réceptionner (118) une valeur de température extérieure ;
- détecter (120) des conditions atmosphériques givrantes à partir de la teneur en eau et de la valeur de température extérieure.

13. Programme d'ordinateur comportant des instructions pour mettre en oeuvre le procédé de détermination selon la revendication 11, lorsqu'il est exécuté par un processeur.

14. Programme d'ordinateur comportant des instructions pour mettre en oeuvre le procédé de détection selon la revendication 12, lorsqu'il est exécuté par un processeur.

**Patentansprüche**

1. Anordnung, umfassend ein Luftfahrzeug und eine Vorrichtung zum Bestimmen (1) des Wassergehalts in der Atmosphäre, umfassend:

- einen Laseremitter (2), welcher dazu geeignet ist, einen Laserstrahl (14) zu emittieren, welcher dazu vorgesehen ist, Partikel zu beleuchten;
- einen ersten Bildgeber (4), welcher einen ersten Sammelwinkel ($\alpha$1) aufweist, welcher dazu geeignet ist, wenigstens ein erstes Bild (36) aufzunehmen, welches Partikel (11, 12) repräsentiert, welche in einem ersten Bereich von Abmessungen umfasst sind, und
- einen zweiten Bildgeber (5), welcher einen zweiten Sammelwinkel ($\alpha$2) aufweist, welcher dazu geeignet ist, wenigstens ein zweites Bild aufzunehmen, welches Partikel (11, 12) von einem zweiten Bereich von Abmessungen repräsentiert, und

- eine Verarbeitungseinheit (6) in Kommunikationsverbindung mit dem ersten Bildgeber (4) und dem zweiten Bildgeber (5), wobei die Verarbeitungseinheit (6) dazu geeignet ist, die ersten und zweiten Bilder zu verarbeiten,

**dadurch gekennzeichnet, dass** der Laseremitter (2), der erste und der zweite Bildgeber im Inneren des Rumpfs des Luftfahrzeugs platziert sind und zu der Außenseite durch eine Luke hindurch weisen, und dass der Laserstrahl polarisiert ist und dazu geeignet ist, Wasserpartikel (11) und/oder Eispartikel (12) zu beleuchten, welche in der Atmosphäre vorliegen, und dass der erste (4) und der zweite (5) Bildgeber nicht scharfgestellt sind, wobei das erste und das zweite Bild durch Diffusion des Laserstrahls an den Wasserpartikeln (11) und/oder den Eispartikeln (12) gebildet werden, wobei die Verarbeitungseinheit (6) dazu in der Lage ist, den Wassergehalt in der Atmosphäre zu bestimmen.

2. Anordnung nach Anspruch 1, wobei der Laserstrahl (14) ein gleichförmiges rechteckiges Intensitätsprofil aufweist.

3. Anordnung nach einem der Ansprüche 1 und 2, wobei der Laserstrahl (14) eine Mantelform aufweist, welche sich in einer Emissionsebene (x, y) erstreckt, und wobei der Laserstrahl (14) entlang einer Richtung senkrecht zu der Emissionsebene (x, y) divergiert.

4. Anordnung nach einem der Ansprüche 1 und 2, wobei der Laserstrahl (14) eine Mantelform aufweist, welche sich in einer Emissionsebene (x, y) erstreckt, und wobei der Laserstrahl (14) entlang einer Richtung senkrecht zu einer Emissionsebene (x, y) in einer Zone nahe zu dem Laseremitter (2) konvergiert und entlang einer Richtung senkrecht zu der Emissionsebene (x, y) in einer Zone entfernt von dem Laseremitter (2) divergiert.

5. Anordnung nach einem der Ansprüche 1 bis 4, wobei der erste Bildgeber (4) einen Feldwinkel ($\beta$1) aufweist, welcher zwischen 2° und 10° beträgt, und der zweite Bildgeber (5) einen Feldwinkel ($\beta$2) aufweist, welcher zwischen 10° und 25° beträgt.

6. Anordnung nach einem der Ansprüche 1 bis 5, wobei der Laserstrahl (2) eine Emissionsachse (A-A) aufweist, der erste Bildgeber (4) eine Pupille (21) und eine Diffusionsachse (B-B) umfasst, der zweite Bildgeber (5) eine Pupille (21) und eine Diffusionsachse (C-C) umfasst, und wobei die Länge der Diffusionsachse (B-B) des ersten Bildgebers (4), welche zwischen der Pupille (21) des ersten Bildgebers (4) und der Emissionsachse (A-A) definiert ist, zwischen 50 Millimeter und 200 Millimeter beträgt, und die Länge der Diffusionsachse (C-C) des zweiten Bildgebers (5), welche zwischen der Pupille (21) des zweiten Bildgebers (5) und der Emissionsachse (A-A) definiert ist, zwischen 100 Millimeter und 300 Millimeter beträgt.

7. Anordnung nach einem der Ansprüche 1 bis 6, welches ferner einen dritten Bildgeber umfasst, welcher nicht scharfgestellt ist, welcher einen dritten Sammelwinkel aufweist, welcher dazu geeignet ist, wenigstens ein drittes Bild aufzunehmen, welches Partikel repräsentiert, welche in einem dritten Bereich von Abmessungen umfasst sind, und dass die Verarbeitungseinheit (6) in Kommunikationsverbindung mit dem dritten Bildgeber ist, wobei die Verarbeitungseinheit dazu geeignet ist, die von dem ersten, dem zweiten und dem dritten Bildgeber aufgenommenen Bilder zu verarbeiten, um den Wassergehalt zu bestimmen, welcher in der Atmosphäre vorliegt.

8. Anordnung nach einem der Ansprüche 1, 2, 5 bis 7, wobei der Laserstrahl (14) eine Mantelform aufweist, welche sich in einer Emissionsebene (x, y) erstreckt, und wobei die mittlere Abmessung des Laserstrahls (14) entlang einer Richtung (z) senkrecht zu der Emissionsebene (x, y) durch die folgende Beziehung definiert ist:

$$t\,(di) = 2 \times \ln\,((di + 150)/150)$$

wobei:

- t die Abmessung des Laserstrahls (14) gemessen entlang einer Richtung (z) senkrecht zu der Emissionsebene (x, y) ist, und
- di die Abmessung der in der Ebene senkrecht zu der Diffusionsachse gemessenen Partikel ist.

9. Anordnung nach Anspruch 1, wobei der Laserstrahl (14) eine Mantelform aufweist, welche sich in einer Emissionsebene (x, y) erstreckt, und wobei der erste und der zweite Bildgeber (4, 5) jeweils eine optische Achse (B-B, C-C) besitzen, welche einen Diffusionswinkel $(\theta_1, \theta_2)$ mit der Emissionsebene (x, y) des Lasermantels bildet, und wobei die Diffusionswinkel $(\theta_1, \theta_2)$ gleich 90° und 120° sind.

10. Anordnung, umfassend ein Luftfahrzeug und eine Vorrichtung zur Detektion (30) von gefrierenden atmosphärischen Bedingungen, welche umfasst:

- eine Anordnung, wie gemäß einem der Ansprüche 1 bis 9 definiert;
- einen Eingang (7), welcher dazu geeignet ist, einen Temperaturwert der äußeren Luft zu empfangen,

und wobei die Verarbeitungseinheit (6) dazu geeignet ist, gefrierende atmosphärische Bedingungen als Funktion des bestimmten Wassergehalts und des Temperaturwerts der äußeren Luft zu detektieren.

11. Verfahren zum Bestimmen des Wassergehalts in der Atmosphäre durch Verarbeitung von Bildern (36), welche durch eine Vorrichtung zum Bestimmen (1) aufgenommen werden, welche einen Laseremitter (2), welcher dazu geeignet ist, einen Laserstrahl (14) zu emittieren, welcher dazu bestimmt ist, Wasser- und Eispartikel zu beleuchten, welche in der Atmosphäre vorliegen, einen ersten (4) und einen zweiten (5) Bildgeber, welche dazu geeignet sind, wenigstens ein erstes Bild (36) bzw. ein zweites Bild aufzunehmen, welche Interferogramme enthalten, welche Partikel (11, 12) repräsentieren, und eine Verarbeitungseinheit (6) in Kommunikationsverbindung mit dem ersten (4) und zweiten Bildgeber (5) umfasst, wobei das Verfahren die folgenden Schritte umfasst:

- Trennen (101) der Interferogramme (22) von der Unterseite des ersten Bilds (4) und der Unterseite des zweiten Bilds (5);
- Suchen (102) der Interferogramme (22), welche Wasserpartikel repräsentieren, und der Interferogramme (22), welche Eispartikel repräsentieren;
- Bestimmen (104) der Abmessungen der Wasserpartikel (11, 12), welche in dem ersten Bild (36) und dem zweiten Bild dargestellt sind, durch Berechnen der Fourier-Transformation der Interferogramme (22);
- Bestimmen (108) der Abmessungen der Eispartikel (11, 12), welche in dem ersten Bild (36) und dem zweiten Bild dargestellt sind, indem eine Autokorrelationsfunktion in zwei Dimensionen von Fleckenmotiven der Interferogramme (22) gebildet wird,
- Berechnen (106, 110, 112, 114) der Masse der Partikel pro Einheitsvolumen der in dem ersten Bild und dem zweiten Bild dargestellten Partikel ausgehend von den bestimmten Abmessungen; und
- Bestimmen (116) des Wassergehalts in der Atmosphäre durch Addition der berechneten Masse für das erste Bild und der berechneten Masse für das zweite Bild.

12. Verfahren zur Detektion von gefrierenden atmosphärischen Bedingungen, **dadurch gekennzeichnet, dass** es die folgenden Schritte umfasst:

- Bestimmen (116) des Wassergehalts durch Ausführen des Verfahrens zum Bestimmen nach Anspruch 11;

- Empfangen (118) eines äußeren Temperaturwerts;
- Detektieren (120) von gefrierenden atmosphärischen Bedingungen ausgehend von dem Wassergehalt und dem äußeren Temperaturwert.

13. Computerprogramm, welches Anweisungen zum Durchführen des Verfahrens zum Bestimmen nach Anspruch 11 umfasst, wenn es durch einen Prozessor ausgeführt wird.

14. Computerprogramm, umfassend Anweisungen zum Durchführen des Verfahrens zur Detektion nach Anspruch 12, wenn es durch einen Prozessor ausgeführt wird.

**Claims**

1. Assembly comprising an aircraft and a device (1) for determining the water content in the atmosphere, comprising:

   - a laser emitter (2) able to emit a laser beam (14) intended to illuminate particles,
   - a first imager (4) having a first collection angle ($\alpha$1), able to capture at least one first image (36) representing particles (11, 12) in a first range of sizes,
   - second imager (5) having a second collection angle ($\alpha$2), able to capture at least one second image representing particles (11, 12) in a second range of sizes, and
   - a processing unit (6) in communication connection with the first imager (4) and with the second imager (5), the processing unit (6) being able to process the first and second images,

   **characterised in that** the laser emitter (2), the first and the second imagers are placed inside the fuselage of an aircraft and point towards the outside through a window, and **in that** the laser beam is polarized and is adapted to illuminate water particles (11) and/or ice particles (12) present in the atmosphere and **in that** the first (4), and **in that** the first (4) and the second (5) imagers are out-of-focus imagers, the first and the second images being formed by diffusion of the laser beam on the water particles (11) and/or ice particles (12), the processing unit (6) being able to determine the water content in the atmosphere.

2. Assembly according to claim 1, in which the laser beam (14) has a uniform rectangular intensity profile.

3. Assembly according to either claim 1 or claim 2, in which the laser beam (14) has a sheet form that lies in an emission plane (x, y), and in which said laser beam (14) diverges in a direction perpendicular to the emission plane (x, y).

4. Assembly according to either claim 1 or claim 2, in which the laser beam (14) has a sheet form that lies in an emission plane (x, y), and in which said laser beam (14) converges in a direction perpendicular to the emission plane (x, y) in a zone close to the laser emitter (2), and diverges in a direction perpendicular to the emission plane (x, y) in a zone distant from the laser emitter (2).

5. Assembly according to any of claims 1 to 4, in which the first imager (4) has a field angle ($\beta$1) of between 2° and 10° and the second imager (5) has field angle ($\beta$2) of between 10° and 25°.

6. Assembly according to any of claims 1 to 5, in which the laser beam (2) has an emission axis (A-A), the first imager (4) comprising a pupil (21) and a diffusion axis (B-B), the second imager (5) comprising a pupil (21) and a diffusion axis (C-C) and wherein the length of the diffusion axis (B-B) of the first imager (4) defined between the pupil (21) of the first imager (4) and the emission axis (A-A) is between 50 millimetres and 200 millimetres, and the length of the diffusion axis (C-C) of the second imager (5) defined between the pupil (21) of the second imager (5) and the emission axis (A-A) is between 100 millimetres and 300 millimetres.

7. Assembly according to any of claims 1 to 6, which further comprises a third out-of-focus imager having a third collection angle able to capture at least one third image representing particles lying in a third range of sizes, and in that the processing unit (6) is in communication connection with the third imager, the processing unit being able to process the images captured by the first, second and third imagers in order to determine the water content present in the atmosphere.

8. Assembly according to any of claims 1, 2, 5 to 7, in which the laser beam (14) has a sheet form that lies in an emission plane (x, y), and in which the mean dimension of the laser beam (14) in a direction (z) perpendicular to the emission plane (x, y) is defined in accordance with the following equation

$$t(di) = 2 \text{ x In } ((di + 150)/150)$$

in which:

   - t is the dimension of the laser beam (14) measured in a direction (z) perpendicular to the emission plane (x, y), and

- di is the size of the particles measured in the plane perpendicular to the diffusion axis.

9. Assembly according to claim 1, in which the laser beam (14) has a sheet form that lies in an emission plane (x, y), and in which the first and the second imagers (4, 5) have each an optical axis (B-B, C-C) that forms a diffusion angle ($\theta_1$, $\theta_2$) with the emission plane (x, y) of the laser sheet, and in which the diffusion angles ($\theta_1$, $\theta_2$) are equal to 90° and 120°.

10. Assembly comprising an aircraft and a device (30) for detecting icing atmospheric conditions, which comprises:

     - an assembly defined according to any of claims 1 to 9,
     - an input (7) able to receive a temperature value of the outside air,

and in which the processing unit (6) is able to detect icing conditions according to the water content determined and the value of the temperature of the outside air.

11. Method for determining the water content in the atmosphere by the processing of images (36) acquired by a determination device (1) comprising a laser emitter (2) able to emit a laser beam (14) intended to illuminate water and ice particles present in the atmosphere, a first (4) and second (5) imager able to capture at least one first image (36) and respectively a second image containing interferograms representing particles (11, 12), and a processing unit (6) in communication connection with the first (4) and second (5) imager, the method comprising the following steps:

     - separating (101) the interferograms (22) from the background of the first image (4) and of the second image (5);
     - searching (102) the interferograms (22) representing the water particles (11) and interferograms (22) representing ice particles;
     - determining (104) the sizes of the particles (11, 12) of water imaged on said first image (36) and said second image by calculation of the Fourier transform of the interferograms (22);
     - determining (108) the sizes of the ice particles (11, 12) imaged on said first image (36) and said second image by carrying out a two-dimensional autocorrelation function of the speckle pattern of the interferograms (22);
     - calculating (106, 110, 112, 114) the mass of the particles per unit volume of the imaged particles on said first image and said second image from the sizes determined; and
     - determining (116) the water content in the atmosphere by adding the mass calculated for the first image and the mass calculated for the second image.

12. Method for detecting icing atmospheric conditions, **characterised in that** it comprises the following steps:

     - determining (116) the water content by implementing the determination method described above with reference to claim 11;
     - receiving (118) an outside temperature value;
     - detecting (120) icing atmospheric conditions from the water content and the outside temperature value.

13. Computer program containing instructions for implementing the determination method according to claim 11, when it is executed by a processor.

14. Computer program containing instructions for implementing the detection method according to claim 12, when it is executed by a processor.

**FIG. 1**

FIG. 2

EP 3 274 686 B1

FIG. 3

FIG. 4

**FIG. 5**

EP 3 274 686 B1

Réceptionner une image —100

Segmenter les interferogrammes —101

Rechercher franges d'interférence/tavelures —102

Déterminer dimention particule d'eau —104

Calcul masse d'eau —106

Déterminer dimension particule de glace —108

Calcul masse de glace —110

111

Calcul masse d'eau moyenne masse de glace moyenne 1er volume —112

Calcul masse d'eau moyenne masse de glace moyenne 2ème volume —114

Déterminer teneur en eau —116

# FIG. 6

FIG. 7

Déterminer teneur en eau — 116

Réceptionner valeur de température — 118

Déterminer des conditions givrantes — 120

# FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008231854 A1

**Littérature non-brevet citée dans la description**

- Aircraft and Engine Certification Requirements for Supercooled Large Drop, Mixed Phase and Ice Crystal Icing Conditions. *Federal Aviation Administration Docket No. FAA-2010-0636,* 04 Novembre 2014
- **Z. ULANOWSKI et al.** Retrieving the size of particles with rough and complex surfaces from two-dimensional scattering patterns. *Journal of Quantitative Spectroscopy and Radiative Transfer,* 2012
- **D. CHICEA.** Biospeckle size and contrast measurement application in particle sizing and concentration assessment. *Biophysics,* 12 Septembre 2006

- **G. KOENIG ; K. ANDERS ; A. FROHN.** A new light-scattering technique to measure the diameter of periodically generated moving droplets. *Journal of Aerosol Sciences,* 1986, vol. 17, 157-167
- **ANDREW J. HEYMSFIELD.** Refinements to Ice Particle Mass Dimensional and Terminal Velocity Relationships for Ice Clouds. Part II: Evaluation and Parameterizations of Ensemble Ice Particle Sédimentation Velocities. *Journal Of The Atmospheric Sciences,* 2006